# EUROPÄISCHE PATENTANMELDUNG

(11) **EP 2 541 397 A1**
(43) Veröffentlichungstag der Anmeldung: **02.01.2013**
(21) Anmeldenummer: 11005380.8
(22) Anmeldetag: 30.06.2011
(51) Int. Cl.: G06F 9/445, G05B 19/418

(54) **Verfahren zur Kompatibilitätsprüfung bei der Installation einer Software-Komponente**

(71) Anmelder: Siemens Aktiengesellschaft, 80333 München (DE)
(72) Erfinder: Bürgel, Marcus, 90562 Heroldsberg (DE); Kielburger, Helmut, 91054 Erlangen (DE); Klose, Ralf, 90518 Altdorf (DE); Lange, Ronald, 90766 Fürth (DE); Thomas, Karlheinz, 90425 Nürnberg (DE)

(57) **Zusammenfassung**

Die Erfindung betrifft ein Verfahren zur Installation einer ersten Software-Komponente (STEP7 Prof V11 SP1, WinCC Prof V11 SP1) auf einer Ziel-Plattform (ZP) mit bestehenden (zweiten) Software-Komponenten (TiaPortal, STEP7 Prof V11, WinCC Prof V11), wobei die Kompatibilität der ersten (STEP7 Prof V11 SP1, WinCC Prof V11 SP1) und der zweiten Software-Komponenten (TiaPortal, STEP7 Prof V11, WinCC Prof V11) zu überprüfen ist. Dazu werden zusammen mit der ersten Software-Komponente (STEP7 Prof V11 SP1, WinCC Prof V11 SP1) Kompatibilitäts-Informationen bereitgestellt, wobei mittels eines Prüfprogramms auf der Ziel-Plattform vorhandene zweite Software-Komponenten (TiaPortal, STEP7 Prof V11, WinCC Prof V11) ermittelt werden, und wobei mittels des Prüfprogramms anhand der Kompatibilitäts-Informationen die Installation der ersten Software-Komponente (STEP7 Prof V11 SP1, WinCC Prof V11 SP1) freigegeben wird, oder nicht.

## Beschreibung

Die Erfindung betrifft ein Verfahren zur Installation einer ersten Software-Komponente auf einer Ziel-Plattform mit zweiten Software-Komponenten gemäß dem Oberbegriff des Patentanspruchs 1.

Für Datenverarbeitungsgeräte werden häufig Software-Pakete verwendet, die aus verschiedenen Software-Komponenten bestehen, die zusammenwirken oder zumindest Daten miteinander austauschen oder auf einen gemeinsamen Datenbestand zugreifen. Solche Software-Pakete sind oft nicht homogen, d.h., dass nicht immer alle Software-Komponenten demselben Versionsstand entsprechen und gleichzeitig erstellt bzw. installiert werden. Es ist vielmehr so, dass die einzelnen Software-Komponenten von einem Anwender getrennt gehandhabt und zu verschiedenen Zeitpunkten und auch in verschiedenen Versionsständen installiert werden können. Dies betrifft insbesondere die Engineering-Systeme für industrielle Automatisierungsanordnungen, wobei die Engineering-Systeme aus unterschiedlichen Software-Komponenten wie Editor, Compiler, Linker/Loader, Simulator und den unterschiedlichen Programmbibliotheken und Baustein-Bibliotheken bestehen.

Aufgrund technischer Randbedingungen, insbesondere aber wegen eines nur begrenzt leistbaren Testaufwands, können dabei nicht alle theoretisch möglichen Kombinationen von Software-Komponenten in allen möglichen verfügbaren Versionsständen bereits beim Liefereinsatz eines Produktes vollständig ausgetestet sein. Aus diesem Grund werden oft vereinfachte Regeln für die Installation einer ersten Software-Komponente auf einer solchen Zielplattform vorgesehen, auf der bereits zweite, vorhandene Software-Komponenten angeordnet sind. Beispielsweise kann bestimmt werden, dass eine erste Software-Komponente aus einem jüngeren Programmpaket, also mit einem höheren Versionsstand, auf einer Ziel-Plattform installiert werden kann, auf der sich bereits andere Software-Komponenten desselben Programmpakets, aber in einer älteren Version befinden. Dabei wird davon ausgegangen, dass neuere Versionen regelmäßig zu älteren Versionen, die bereits installiert sind, "abwärtskompatibel" sind. Umgekehrt wird jedoch auch davon ausgegangen, dass die nachträgliche Installation einer älteren Software-Komponente auf einer Ziel-Plattform mit jüngeren Mitgliedern derselben "Programmfamilie" zu Störungen führt, weil in der älteren Version die Änderungen der jüngeren Version naturgemäß noch nicht vorgesehen sein können. Es ist aber klar, dass eine solche pauschale Regelung zwar leicht durch eine "Setup-Routine" einer Software-Komponente berücksichtigt werden kann, das andererseits aber eine solche pauschale Regel zwar oft, aber nicht immer gültig sein kann.

Komplexere Regeln für die Kompatibilität einer zu installierenden (ersten) Software-Komponente zu etwaigen vorhandenen anderen (zweiten) Software-Komponenten können natürlich auch in einer Dokumentation für einen Anwender hinterlegt werden, so dass es in der Verantwortung des Anwenders liegt, eine Installation zu versuchen, oder aber auch nicht. Insbesondere ist es möglich, dass sich im Laufe der Zeit die verfügbaren Informationen über Kompatibilität bzw. In-Kompatibilitäten ändern oder neue Informationen hinzukommen, wobei es schwer ist, eine entsprechende Dokumentation für einen Anwender stets aktuell zu halten.

Es ist also eine Aufgabe der vorliegenden Erfindung, bei der Installation einer Software-Komponente die Kompatibilität zu bereits vorhandenen Software-Komponenten festzustellen, und dabei auf möglichst aktuelle Informationen zur Kompatibilität zurückzugreifen.

Es ist ein Kerngedanke der erfindungsgemäßen Lösung der beschriebenen Aufgabe, dass mit einer zu installierenden Software-Komponente ein Prüfprogramm und automatisch verarbeitbare Informationen über die Kompatibilität zu anderen, evtl. schon installierten, Software-Komponenten mitgeliefert werden und auf einer Ziel-Plattform gespeichert werden, wobei eine Installation der gelieferten Software-Komponenten nur dann stattfinden soll, wenn die Kompatibilitäts-Informationen keinen Hinweis auf zu erwartende Probleme ergeben.

Die Lösung der Aufgabe sieht insbesondere ein Verfahren zur Installation einer ersten Software-Komponente auf einer Ziel-Plattform gemäß dem Patentanspruch 1 vor. Dabei wird ein Verfahren zur Installation einer ersten Software-Komponente auf einer Ziel-Plattform mit zumindest einer bestehenden zweiten Software-Komponente vorgeschlagen, wobei die erste und die zumindest eine zweite Software-Komponente in jeweils verschiedenen Versionen vorliegen können, und wobei die erste Software-Komponente mit der zweiten Software-Komponente in ihren jeweiligen Versionen kompatibel sein kann, oder nicht. Dabei werden zusammen mit der ersten Software-Komponente Informationen über die Kompatibilität der ersten Software-Komponente in ihrer zu installierenden Version mit der zumindest einen zweiten Software-Komponente in ihrer installierten Version bereitgestellt, wobei in einem nächsten Schritt mittels eines Prüfprogramms auf der Ziel-Plattform etwaige vorhandene zweite Software-Komponenten ermittelt werden, wonach mittels des Prüfprogramms anhand einer Versions-Kennzeichnung der ersten Software-Komponente und einer oder mehreren Versions-Kennzeichnungen einer, mehrerer oder aller ermittelten zweiten Software-Komponenten die Kompatibilität der ersten mit der oder den ermittelten zweiten Software-Komponente (n) unter Verwendung der bereitgestellten Informationen festgestellt wird, wobei bei vorhandener Kompatibilität ("In-Kompatibilität") die Installation der ersten Software-Komponente freigegeben wird, und wobei bei nicht vorhandener Kompatibilität die Installation der ersten Software-Komponente gesperrt wird oder zumindest eine Warnmeldung ausgegeben wird. Durch die Verwendung der bereitgestellten Informationen können alle bis zum Lieferzeitpunkt der ersten Software-Komponente bekannten Informationen über Kompatibilitäten und In-Kompatibilitäten automatisch verarbeitet werden. Es ist somit sichergestellt, dass sich stets die aktuellsten Kompatibilitätsinformationen auf der Zielplattform befinden.

Vorteilhafte Ausgestaltungen des erfindungsgemäßen Verfahrens sind in den abhängigen Patentansprüchen angegeben.

Vorteilhaft wird mit der ersten Software-Komponente auch das Prüfprogramm der Ziel-Plattform bereitgestellt, so dass auch in den Fällen, in denen die Ziel-Plattform noch nicht über ein entsprechendes Prüfprogramm verfügt, dieses sofort einsatzbereit ist. Für den Fall, dass auf der Ziel-Plattform ohnehin bereits ein Prüfprogramm vorliegt, wird ein Versionsvergleich zwischen dem bereits vorhandenen Prüfprogramm und dem bereitgestellten Prüfprogramm vorgenommen, wobei das aktuellere Prüfprogramm verwendet werden soll. In den Fällen, in denen beispielsweise wegen fehlender Kompatibilität keine neue Software installiert wird, können wahlweise dennoch die neuesten Kompatibilitäts-Informationen und/oder das neueste Prüfprogramm installiert werden, oder nicht. In einer alternativen Ausführungsform können die Informationen auch im Prüfprogramm integriert sein; in diesem Fall wird mit Installation einer neuen Version des Prüfprogramms auch ein Update der Kompatibilitätsinformationen durchgeführt, und umgekehrt.

Die Informationen über die Kompatibilität können sowohl positive als auch negative Informationen umfassen. Dies bedeutet, dass zum einen Informationen über explizit miteinander lauffähige Kombinationen von Software-Komponenten und deren Versionen vorliegen können, und umgekehrt auch in den Informationen explizit Kombinationen von Software-Komponenten und deren Versionsstände angegeben sein können, von deren gemeinsamer Verwendung abzuraten ist.

Vorteilhaft wird für die Kommunikation zwischen einer Setup-Routine, die üblicher Weise Bestandteil der gelieferten Software-Komponente ist, und dem Prüfprogramm eine standardisierte Schnittstelle vorgesehen, was den Vorteil hat, dass ältere Prüfprogramme auch mit neueren Setup-Routinen zusammenwirken können und umgekehrt. Ebenso wird vorteilhaft für die Kompatibilitäts-Informationen ein standardisiertes Datenformat verwendet, vorteilhaft auf Basis von XML-Dateien. Die letztgenannten XML-Dateien haben weiterhin den Vorteil, dass diese leicht mit neueren Informationen angereichert werden können, ohne die kompletten alten, vorhandenen Informationen verwerfen zu müssen. Insbesondere ist es in einer vorteilhaften Ausgestaltung auch möglich, mehre getrennte Dateien oder Datensätze mit Informationen parallel oder nacheinander zu verwenden. Über die standardisierte Schnittstelle werden vorteilhaft von dem Setup-Programm Angaben über die Art und Version der zu installierenden ersten Software-Komponente zu dem Prüfprogramm übermittelt, wodurch das Prüfprogramm in die Lage versetzt wird, die vorhandenen Informationen hinsichtlich dem konkret zu installierenden Produkt zu untersuchen. Insbesondere ist es auch möglich, dass die zu installierende Software-Komponente wiederum aus einem ganzen Bündel einzelner Routinen oder Programmen besteht, wobei jede dieser Routinen oder Programme eine eigene Versionsbezeichnung haben kann und wobei jede dieser Versionsbezeichnungen zu dem Prüfprogramm übermittelt und hinsichtlich der Kompatibilität zu bereits vorhandenen Software-Komponenten, Routinen und einzelne Programmen untersucht werden kann.

Während der Prüfung oder spätestens nach Abschluss der Prüfung können von dem Prüfprogramm Installationsprogramme und/oder Fehlermeldungen ausgegeben werden, die einem Anwender beispielsweise Hinweise darauf geben, welche Maßnahmen doch noch zum Erfolg der Installation führen können.

Vorteilhaft können die bereitgestellten Informationen nicht nur anstelle vorhandener Informationen, sofern es solche überhaupt schon gibt, verwendet werden, sondern auch zur Änderung (Update) oder Erweiterung (Upgrade) bereits vorhandener Informationen über Kompatibilitäten und In- Kompatibilitäten.

Da auch nach Bereitstellung der jüngsten der installierten Software-Komponenten noch neue bzw. aktualisierte Informationen über Kompatibilitäten generiert werden können, kann das Prüfprogramm auch sporadisch oder regelmäßig beim Start eines Programmpakts oder einzelner Software-Komponenten aufgerufen werden, wobei dann, beispielsweise über eine Internet-Verbindung, solche aktuelle Informationen beschafft und zur Überprüfung der installierten Programmstruktur der Ziel-Plattform verwendet werden können. Somit können einem Anwender auch nachträglich noch Hinweise und Warnmeldungen über zwischenzeitlich erkannte Probleme gegeben werden, wobei im Extremfall auch der Start der aufgerufenen Software-Komponente automatisch verhindert werden kann, beispielsweise in solchen Fällen, in denen schwerwiegende Fehler drohen.

Ein Ausführungsbeispiel des erfindungsgemäßen Verfahrens wird nachfolgend anhand der Zeichnungen erläutert.

Dabei zeigen:
- Figur 1: die zeitliche Abfolge des Erscheinens ("Release") einzelner Software-Komponenten eines Engineering-Systems,
- Figur 2: ein erstes Ausführungsbeispiel für Software-Komponenten und Informationen eines Installations-datenträges und ein erstes Ausführungsbeispiel für auf einer Zielplattform vorhandene Komponenten, und
- Figur 3: ein zweites Ausführungsbeispiel für Software-Komponenten und Informationen eines Installations-Datenträgers und ein zweites Ausführungsbeispiel für auf einer Ziel-Plattform vorhandene Software-Komponenten und Informationen.

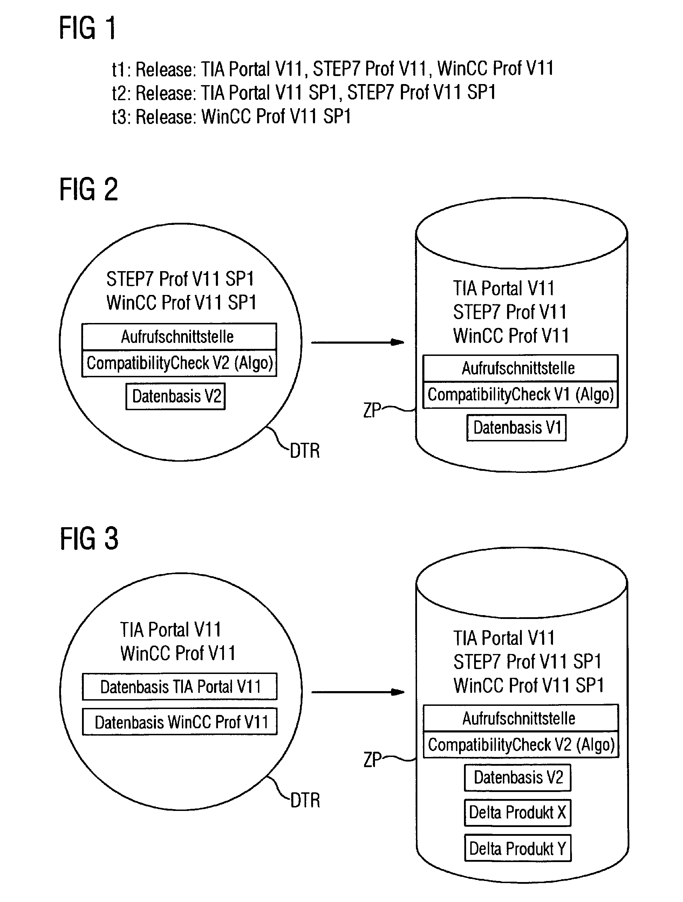

In der Figur 1 sind die Erscheinungszeitpunkte (Release-Daten) t1, t2, t3 der Software-Komponenten TiaPortal, STEP7 und WinCC eines Programmpaketes verzeichnet, wobei das Programmpaket ein Engineering-System für industrielle Automatisierungskomponenten betrifft. Zu einem ersten, frühen Zeitpunkt T1 sind die Produkte TiaPortal, STEP7 Prof ("Professional") und WinCC jeweils in der Version V11 erschienen. Zu einem späteren Zeitpunkt T2 sind "Updates" der Version 11 erschienen, nämlich für das Produkt TiaPortal als "Service-Pack1", kurz: SP1, und für das Produkt STEP7 Prof, bei der ebenfalls ein Service-Pack SP1 erschienen ist. Zu einem noch späteren Zeitpunkt T3 ist der Service-Pack SP1 für das Produkt WinCC Prof erschienen. Der Einfachheit halber wird davon ausgegangen, dass ein neueres Produkt auf einer bestehenden Installation mit älteren Produkten installiert werden kann, nicht aber umgekehrt. In einer realen Umgebung können diese Kompatibilitäten wesentlich komplexer ausgestaltet sein, beispielsweise dergestalt, dass eine Installation von WinCC Prof V11 SP1 nicht stattfinden kann, wenn auf der Ziel-Plattform beispielsweise STEP7 Prof V11 installiert ist, o.ä.

Anhand der Figuren 2 und 3 wird im Folgenden diskutiert, auf welche Weise ein Datenträger DTR mit einer zu installierenden ersten Software-Komponente bzw. mehreren zu installierenden ersten Software-Komponenten und entsprechenden bereitgestellten Informationen (Kompatibilitäts-Informationen) seitens einer Ziel-Plattform ZP verarbeitet wird, auf der bereits zweite Software-Komponenten und ggf. auch Informationen (Kompatibilitäts-Informationen) gespeichert sind. Während dabei jeweils der Fall diskutiert wird, in dem ein Prüfprogramm und die Informationen (Kompatibilitäts-Informationen) getrennt voneinander bereitgestellt werden, können in einer alternativen, nicht dargestellten Ausführungsform die Informationen auch in einem Prüfprogramm integriert sein und somit mittels des Prüfprogramms zur Verfügung gestellt werden. Ebenso müssen die Informationen nicht zwangsläufig Teil des Datenträgers DTR sein, sondern können auch aus einer dritten Quelle, beispielsweise einer Datenbank im Internet, bezogen werden. Außerdem müssen die ersten Software-Komponenten nicht zwangsläufig überhaupt mittels eines Datenträgers DTR, beispielsweise einer CD-ROM, zur Verfügung gestellt werden, sondern können auch auf einem anderen Wege bereitgestellt werden, insbesondere per Abruf über ein Datennetz, beispielsweise das Internet. Ebenso wird zwar im Rahmen der Ausführungsbeispiele vorausgesetzt, dass ein Prüfprogramm auf der Zielplattform abläuft und dabei auf dort gespeicherte oder zwischengespeicherte Informationen zurückgreift, aber in einer alternativen Ausführungsform kann das Prüfprogramm beispielsweise auch auf einem separaten Server oder auf einer anderen Maschine in einem Datennetz gespeichert sein und ablaufen, wobei seitens dieses Servers die notwendigen Untersuchungen durchgeführt und die notwendigen Informationen, insbesondere über die "Erlaubnis" zu einer Installation, bereitgestellt werden können.

In der Figur 2 ist als Bestandteil einer Ziel-Plattform ZP schematisch ein Programmspeicher einer Automatisierungskomponente dargestellt, wobei auf der Automatisierungskomponente bereits die Produkte TiaPortal V11, STEP7 Prof V11 und WinCC Prof V11 installiert sind. Außerdem ist ein Prüfprogramm ("CompatibilityCheck") in der Version V1 installiert; der Zusatz "Algo" bedeutet dabei, dass das Prüfprogramm nur die Prüfroutinen ("Algorithmus") selbst in der älteren Version 1 umfasst, nicht jedoch die für die Prüfung notwendigen Informationen. Diese sind getrennt als "Datenbasis" in der Version V1 gespeichert. Mittels eines Datenträgers DTR sollen nun die Produkte STEP7 Prof V11 SP1 und WinCC Prof V11 SP1 installiert werden. Der Datenträger DTA umfasst weiterhin eine jüngere Version des Prüfprogramms, nämlich "CompatibilityCheck" in der Version V2 und die dazu gehörigen Informationen ("Datenbasis"), ebenfalls in einer im Vergleich mit der installierten Version jüngeren Version V2. In der Figur ist weiterhin dargestellt, dass jedes Prüfprogramm (CompatibilityCheck V1, V2) mit einer einheitlichen Aufrufschnittstelle versehen ist; diese soll für alle bekannten Versionen des Prüfprogramms gleich ausgestaltet oder zumindest mit den relevanten Installationsroutinen ("Setup") kompatibel sein.

Mit Aufruf der Installationsroutine ("Setup") des Programms STEP7 Prof V11 SP1 wird zunächst überprüft, ob auf dem Datenträger DTR eine aktuellere Version des Prüfprogramms gespeichert ist, als auf der Zielplattform ZP; da dies der Fall ist, wird das bestehende Prüfprogramm gegen das der Version V2 ausgetauscht. Danach wird geprüft, ob der Datenträger DTR neuere Informationen umfasst, als diejenigen, die auf der Zielplattform ZP gespeichert sind. Auch dies ist der Fall; die auf dem Datenträger DTR gespeicherten Informationen sind jünger (Version 2), als diejenigen, die auf der Zielplattform ZP bereits vorliegen (Version 1). Somit werden die Informationen in der Version V1 der Zielplattform ZP gegen die des Datenträgers V2 ausgetauscht. Wesentlich ist, dass dabei immer die aktuellste Version der Informationen und vorteilhaft auch des Prüfprogramms zum Einsatz kommt und auf der Zielplattform ZP auch für spätere Überprüfungen gespeichert wird.

Die nach dem "Update" auf der Zielplattform ZP vorhandenen Informationen in der Version V2 repräsentieren dabei diejenigen Abhängigkeiten, die bereits anhand der Figur 1 diskutiert wurden. Demzufolge wird die Installation des Produktes STEP7 Prof V11 SP1 gestattet; selbiges gilt auch für das Produkt WinCC Prof V11 SP1.

Die Figur 3 zeigt dieselbe Anordnung, wobei jedoch auf dem Datenträger DTR für jedes zu installierende Produkt eine eigene Datenbasis als Informationen gespeichert ist. Dies bedeutet, dass die Informationen jeweils auf ein konkretes Produkt bezogen sind und somit losgelöst von den Kompatibilitätsinformationen zu anderen Produkten betrachtet werden. Diese produktspezifischen Informationen werden seitens der Zielplattform ZP zur Erweiterung der dort gespeicherten Informationen verwendet. Dabei liegen auf der Zielplattform ZP schon Ergänzungsinformationen, sog. "Delta-Informationen", über andere Produkte X, Y vor. Dies bedeutet, dass Informationen über Kompatibilitäten nicht zwangsläufig in einer einzigen Datei zusammengefasst sein müssen, sondern auch heterogen gespeichert sein können. Insbesondere können auch neu hinzugekommene Informationen, die beispielsweise auf den Datenträger DTR gespeichert sind, zur Änderung einer bestehenden Datenbank mit Informationen verwendet werden. Dazu ist es in einer vorteilhaften Ausgestaltung möglich, jede einzelne Informationseinheit mit einem separaten Versions-Kennzeichen oder einem separaten Erstell-Datum zu versehen, um sicherzustellen, dass stets nur die aktuellste Information verwendet wird, jedoch andere, ältere Informationen über dieselben Produkte verworfen oder überschrieben werden.

Ein sog. "Setup", also beispielsweise ein Datenträger DTR, kann also anstelle einer komplett neuen Datenbasis mit Informationen auch lediglich eine Erweiterung oder Änderung einer bestehenden Datenbasis bewirken. Außerdem kann auch lediglich oder zusätzlich eine neue oder aktuellere Version eines Prüfprogramms, also eines "Algorithmus", eingespielt werden.

Als weitere vorteilhafte Ausgestaltung kann das Prüfprogramm ("Compatibility Check Tool") nicht nur beim Setup, sondern auch beim Start des Softwarepakets aufgerufen werden. Dadurch kann z.B. eine kontrollierte Fehlerbehandlung durch frühzeitige Erkennung einer inkompatiblen Produktinstallation erfolgen, bevor sich die Inkompatibilität z.B. durch einen "Absturz" des Softwarepakets auswirkt.

Die Schnittstelle zwischen Setup und Compatibility Check Tool kann beispielsweise als Datenaustausch über eine XML-Datei realisiert sein; hier sei ein vereinfachtes Beispiel angegeben:

```
 <?xml version="1.0" encoding="UTF-8"?>
 <CompatibilityCheck version="1" language="de-DE">
     <AddedProducts>
         <ProductVersion
 id="Siemens.Simatic.STEP7.Professional:11.00.01.00"/>
          <ProductVersion
 id="Siemens.Simatic.Portal:11.00.01.00"/>
     </AddedProducts>
     <RemovedProducts>
         <ProductVersion
 id="Siemens.Simatic.Hmi.Basic:11.00.00.00"/>
     </RemovedProducts>
 </CompatibilityCheck>
```

In diesem Fall will der Benutzer also die Produkte "Siemens.Simatic.STEP7.Professional:11.00.01.00" und "Siemens.Simatic.Portal:11.00.01.00" installieren und gleichzeitig das Produkt "Siemens.Simatic.Hmi.Basic:11.00.00.00" deinstallieren.

Die Antwort des Prüfprogramms ("Compatibility Check Tool") könnte dabei wie folgt lauten:

```
 <CompatibilityCheck version="1" language="de-DE">
     <AddedProducts>
         <ProductVersion
 id="Siemens.Simatic.STEP7.Professional:11.00.01.00"/>
         <ProductVersion
 id="Siemens.Simatic.Portal:11.00.01.00"/>
     </AddedProducts>
     <RemovedProducts>
         <ProductVersion
 id="Siemens.Simatic.Hmi.Basic:11.00.00.00"/>
     </RemovedProducts>
     <Compatibility>
         <IssuesAddedRemovedProductsOnly result="NoStartup">
              <DisplayMessage>Installation of selected prod-
 ucts will prevent TIA Portal startup</DisplayMessage>
              <IncompatibilityPair
 id1="Siemens.Simatic.STEP7.Professional:11.00.01.00"
 id2="Siemens.Simatic.STEP7.Safety:11.00.00.00" re-
 sult="NoStartup">
                   <DisplayMessage>Installation of selected
 products will prevent TIA Portal startup</DisplayMessage>
              </IncompatibilityPair>
         </IssuesAddedRemovedProductsOnly>
     </Compatibility>
 </CompatibilityCheck>
```

Der wichtigste Teil ist dabei die Sequenz:

```
     <Compatibility>
         <IssuesAddedRemovedProductsOnly result="NoStartup">
              <DisplayMessage>Installation of selected prod-
 ucts will prevent TIA Portal startup</DisplayMessage>
```

Hier wird das Ergebnis der Prüfung zurückgegeben. In diesem Fall ergab die Prüfung, dass nach der Installation/Deinstallation aufgrund von Inkompatibilitäten kein Start des Softwarepaketes mehr möglich ist. Das Setup kann daher einen Warnhinweis an den Benutzer ausgeben. Als mögliche Erweiterung kann dafür ein spezifischer Text (DisplayMessage) in der XML-Ausgabe sowie eine konkrete Angabe der Produktkombination(en) angegeben werden, die die Inkompatibilitäten verursachen ("IncompatibilityPair").

## Patentansprüche

1. Verfahren zur Installation einer ersten Software-Komponente (STEP7 Prof V11 SP1, WinCC Prof V11 SP1) auf einer Ziel-Plattform (ZP) mit zumindest einer bestehenden zweiten Software-Komponente (TiaPortal, STEP7 Prof V11, WinCC Prof V11),
wobei die erste und die zumindest eine zweite Software-Komponente (TiaPortal, STEP7 Prof V11, WinCC Prof V11) in jeweils verschiedenen Versionen vorliegen können, und
wobei die erste Software-Komponente (STEP7 Prof V11 SP1, WinCC Prof V11 SP1) mit der zweiten Software-Komponente (TiaPortal, STEP7 Prof V11, WinCC Prof V11) in ihren jeweiligen Versionen kompatibel sein kann, oder nicht,
**dadurch gekennzeichnet,**
**dass** zusammen mit der ersten Software-Komponente (STEP7 Prof V11 SP1, WinCC Prof V11 SP1) Informationen (Datenbasis V2) über die Kompatibilität der ersten Software-Komponente (STEP7 Prof V11 SP1, WinCC Prof V11 SP1) in ihrer zu installierenden Version mit der zumindest einen zweiten Software-Komponente (TiaPortal, STEP7 Prof V11, WinCC Prof V11) bereitgestellt werden,
**dass** mittels eines Prüfprogramms (CompatibilityCheck V2) auf der Ziel-Plattform vorhandene zweite Software-Komponenten (TiaPortal, STEP7 Prof V11, WinCC Prof V11) ermittelt werden, dass mittels des Prüfprogramms (CompatibilityCheck V2) anhand einer Versions-Kennzeichnung der ersten Software-Komponente (STEP7 Prof V11 SP1, WinCC Prof V11 SP1) und einer oder mehreren Versions-Kennzeichnungen einer, mehrerer oder aller ermittelten zweiten Software-Komponenten (TiaPortal, STEP7 Prof V11, WinCC Prof V11) die Kompatibilität der ersten mit der oder den ermittelten zweiten Software-Komponente(n) (TiaPortal, STEP7 Prof V11, WinCC Prof V11) unter Verwendung der bereitgestellten Informationen (Datenbasis V2) festgestellt wird, und
**dass** bei nicht vorhandener Kompatibilität eine negative Reaktion erfolgt, und anderenfalls eine positive Reaktion.

2. Verfahren nach Patentanspruch 1,
**dadurch gekennzeichnet, dass**
als positive Reaktion die Installation durchgeführt wird.

3. Verfahren nach einem der vorherigen Patentansprüche, **dadurch gekennzeichnet,**
**dass** als negative Reaktion eine Warnmeldung ausgegeben wird und/oder ein Abbruch der Installation erfolgt.

4. Verfahren nach einem der vorherigen Patentansprüche, **dadurch gekennzeichnet,**
**dass** mit der ersten Software-Komponente (STEP7 Prof V11 SP1, WinCC Prof V11 SP1) der Ziel-Plattform (ZP) auch das Prüfprogramm (CompatibilityCheck V2) in einer ersten Version bereitgestellt wird.

5. Verfahren nach Patentanspruch 4,
**dadurch gekennzeichnet, dass**
in dem Fall, in dem auf der Ziel-Plattform (ZP) bereits eine zweite Version des Prüfprogramms (CompatibilityCheck V1) vorliegt, die neuere der beiden verfügbaren Versionen des Prüfprogramms (CompatibilityCheck V2) verwendet wird.

6. Verfahren nach einem der vorhergehenden Patentansprüche, **dadurch gekennzeichnet,**
**dass** die Informationen (Datenbasis V2) über die Kompatibilität positive, negative oder gemischt positive und negative Informationen umfassen.

7. Verfahren nach einem der vorhergehenden Patentansprüche, **dadurch gekennzeichnet,**
**dass** für die Kommunikation zwischen dem Prüfprogramm (CompatibilityCheck V2) und einem der ersten Software-Komponente (STEP7 Prof V11 SP1, WinCC Prof V11 SP1) zugehörigen Setup-Programm eine standardisierte Schnittstelle (Aufrufschnittstelle) verwendet wird.

8. Verfahren nach Patentanspruch 7,
**dadurch gekennzeichnet,**
**dass** von dem Setup-Programm Angaben über die Art und die Version der zu installierenden ersten Software-Komponente (STEP7 Prof V11 SP1, WinCC Prof V11 SP1) zu dem Prüfprogramm (CompatibilityCheck V2) übermittelt werden.

9. Verfahren nach einem der vorhergehenden Patentansprüche, **dadurch gekennzeichnet,**
**dass** von dem Prüfprogramm (CompatibilityCheck V2) nach Abschluss der Prüfung der Kompatibilität Installationshinweise und/oder Fehlermeldungen ausgegeben werden.

10. Verfahren nach einem der vorhergehenden Patentansprüche, **dadurch gekennzeichnet,**
**dass** die mit der ersten Software-Komponente (STEP7 Prof V11 SP1, WinCC Prof V11 SP1) bereitgestellten Informationen (Datenbasis V2) zur Änderung und/oder Erweiterung einer auf der Zielplattform vorliegenden Kompatibilitäts-Datenbank (Datenbasis V1) verwendet werden, wobei das Prüfprogramm (CompatibilityCheck V2) die gesamten Informationen der Kompatibilitäts-Datenbank (Datenbasis V1, V2) verwendet.

11. Verfahren nach einem der vorhergehenden Patentansprüche, **dadurch gekennzeichnet,**
**dass** das Prüfprogramm (CompatibilityCheck V2) auch sporadisch oder regelmäßig beim Start der Ausführung der ersten Software-Komponente (STEP7 Prof V11 SP1, WinCC Prof V11 SP1) oder einer der zweiten Software-Komponenten (TiaPortal, STEP7 Prof V11, WinCC Prof V11) angewendet wird, wobei
das Programm einen Stop der Programmausführung bei einer erkannten In-Kompatibilität veranlasst.

12. Verfahren nach Patentanspruch 11,
**dadurch gekennzeichnet,**
**dass** sporadisch oder regelmäßig aktuelle Kompatibilitätsinformationen von einer zentralen Datenbank abgerufen und verwendet werden.
